# EUROPÄISCHE PATENTSCHRIFT

(11) **EP 0 608 715 B1**
(45) Veröffentlichungstag und Bekanntmachung des Hinweises auf die Patenterteilung: **15.12.1999**
(21) Anmeldenummer: 94100426.9
(22) Anmeldetag: 13.01.1994
(51) Int. Cl.: B60R 11/02

(54) **Funk-Telekommunikationsvorrichtung in Fahrzeugen**
Wireless-telecommunication device for vehicles
Appareil de radio telecommunication pour véhicules

(30) Priorität: 23.01.1993 DE 4301816
(43) Veröffentlichungstag der Anmeldung: 03.08.1994
(73) Patentinhaber: ALCATEL, 75008 Paris (FR)
(72) Erfinder: Weis, Bernd X., Dr., D-70825 Korntal-Münchingen (DE); Schlesinger, Heinz, D-74395 Mundelsheim (DE)
(74) Vertreter: Brose, Gerhard, Dipl.-Ing.

(56) Entgegenhaltungen:
- EP-A- 0 199 916
- WO-A-93/00752
- INTERNATIONAL CONGRESS ON TRANSPORTATION ELECTRONICS, DEARBORN , MI ,USA, Seiten 11-24, XP000088794 NUMAZAWA: "AUTOMOTIVE ELECTRONICS IN PASSENGER CARS"

## Beschreibung

Funk-Telekommunikationsvorrichtung in Fahrzeugen, insbesondere Kraftfahrzeugen, bestehen aus einzelnen Endgeräten, wie Funktelefon und Fernkopierer. Diese Endgeräte werden über analoge oder digitale Schnittstellen miteinander verbunden, so daß über die HF-Sende- und Empfangseinrichtung des Funktelefons Sprache und Daten innerhalb eines Funknetzes drahtlos ausgetauscht werden. In bekannten Funknetzen wie z.B. das GSM (Global System for Mobile Communications) kann der Teilnehmer verschiedene Dienste (Sprache, Fax, Daten) nutzen, indem er das entsprechende Endgerät auswählt. Da die einzelnen Endgeräte relativ voluminös sind, ist es schwierig, insbesondere mehrere dieser Endgeräte, wie es für ein sogenanntes mobiles Büro zweckmäßig ist, in Fahrzeugen unterzubringen. Weiterhin ist es schwierig die für möglichst viele verschiedene Dienste benötigten vielen verschiedenen Endgeräte in einer benutzerfreundlichen Anordnung miteinander zu verbinden.

Aufgabe der vorliegenden Erfindung ist es deshalb, eine Funk-Telekommunikationsvorrichtung in Fahrzeugen so bereitzustellen, daß die einzelnen Endgeräte weniger voluminös und daher im Fahrzeug geeingeter unterzubringen sind und der bauliche Aufwand für die einzelnen Endgeräte geringer ist.

Zur Lösung dieser Aufgabe ist eine Funk-Telekommunikationsvorrichtung mit dem nach Anspruch 1 angegebenen Merkmalen vorgesehen.

Durch die erfindungsgemäßen Maßnahmen wird lediglich eine einzige zentrale Endgerätesteuerung zur Abwicklung der Protokolle und zur Ansteuerung der Endgeräte innerhalb der Funk-Telekommunikationsvorrichtung benötigt. Durch Integration der telekommunikationsspezifischen Teile aller Endgeräte wird die Anzahl der benötigten Bauteile auf ein Minimum reduziert. Dies bedeutet auch erhebliche Kosteneinsparungen. Nicht integriert sind lediglich die baulich wesentlich kleineren Benutzerteile der Endgeräte. Das kleine Volumen des jeweiligen Benutzerteils ermöglicht eine individuelle Unterbringung der Benutzerteile innerhalb des Kraftfahrzeugs. Darüberhinaus ist die Funk-Telekommunikationsvorrichtung komplex erweiterbar. Die Störanfälligkeit wird durch die Konzentration der telekommunikationsspezifischen Teile verringert.

Vorteilhafte Ausgestaltungen der Erfindung sind den Unteransprüchen zu entnehmen.

Demnach wird z.B. ein optischer Bus mit Steckverbindern eingesetzt, was eine erhebliche Flexibilität bei der Installation in verschiedenen Fahrzeugtypen bedeutet. Bei einem derartigen Übertragungsnetz ist es nach Installation in ein Fahrzeug in vorteilhafter Weise möglich, weitere Endgeräte in einfacher und kostengünstiger Weise nachzurüsten.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Schematisch zeigen:
- Fig. 1: das Blockschaltbild einer erfindungsgemäßen Telekommunikationsvorrichtung für Fahrzeuge,
- Fig. 2: eine mögliche Anordnung der einzelnen Einheiten der Telekommunikationsvorrichtung nach Fig. 1 in einem Pkw und
- Fig. 3: eine Variante der Anordnung.

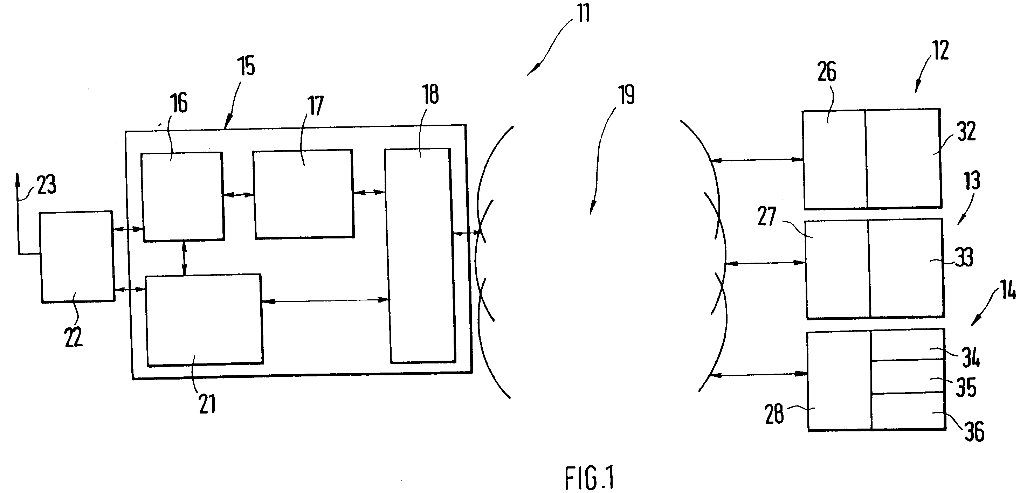

In der Fig. 1 ist als ein bevorzugtes Ausführungsbeispiel eine Telekommunikationsvorrichtung 11 dargestellt, die zum Einbau in Fahrzeugen, insbesondere Kraftfahrzeugen, geeignet ist. Die einzelnen im Kraftfahrzeug zu verwendenden Endgeräte sind jeweils in ihrem eigentlichen Benutzerteil 12, 13 bzw. 14 und ihren telekommunikationsspezifischen Teil räumlich getrennt ausgebildet. Dabei sind die telekommunikationsspezifischen Teile innerhalb einer zentralen Endgerätesteuerung 15 untergebracht.

Die zentrale Endgerätesteuerung 15 besitzt somit für jedes angeschlossene und noch anzuschließende Endgerät dessen telekommunikationsspezifischen Teil. Dieses ist der Teil des jeweiligen Endgerätes der alle Steuerungen und Signalverarbeitung durchführt. Demgegenüber enthält der Benutzerteil des jeweiligen Endgerätes die Eingabe-/Ausgabemittel, wie etwa Mikrofon, Hörer und/oder Tastatur. Das Benutzerteil ist somit die Mensch-Maschine-Schnittstelle des jeweiligen Endgerätes. Nach Fig. 1 enthält die zentrale Endgerätesteuerung 15 eine Einheit 16 zur Protokollabwicklung, eine damit bidirektional verbundene Einheit 17 für die Dienstauswahl und Minimalsignalisierung zum Endgerät, ferner eine damit bidirektional verbundene Schnittstelleneinheit 18 zu einem Übertragungsnetz 19. Darüberhinaus besitzt die zentrale Endgerätesteuerung 15 eine Einheit 21 für die Datenverbindung zum Endgerät und für die Datenformatanpassung. Diese Einheit 21 ist bidirektional sowohl mit der Protokollabwicklungseinheit 16 als auch mit der Schnittstelleneinheit 18 verbunden.

Eingangsseitig ist die zentrale Endgerätesteuerung 15 sowohl über die Protokollabwicklungseinheit 16 als auch über die Datenverbindungseinheit 21 bidirektional mit einer HF-Sende- und Empfangseinrichtung 22 verbunden, an die eine Antenne 23 angeschlossen ist.

Ausgangsseitig ist die zentrale Endgerätesteuerung 15 über die Schnittstelleneinheit 18 bidirektional mit dem Übertragungsnetz 19 verbunden. Das Übertragungsnetz 19 kann in vielfältiger Ausführung innerhalb eines Kraftfahrzeugs angeordnet sein, wie z.B. als Kupferkabel, als optisches Bussystem, insbesondere als CAN (Control Area Network).

Das Übertragungsnetz 19 ist bidirektional mit Schnittstellen 26, 27 und 28 verbunden, welche jeweils in einem der Benutzerteile 12, 13, 14 des betreffenden Endgerätes untergebracht sind.

In diesem Beispiel sind als Endgeräte ein Fernkopierer (Telefaxgerät), ein Telefonapparat und ein PC vorgesehen. Dies bedeutet, daß das Benutzerteil 12 des Fernkopierers ausschließlich einen Drucker 32 mit der Schnittstelle 26 umfaßt, das Benutzerteil 13 des Telefonapparates ausschließlich einen mit einer Wähltastatur versehenen Telefonhörer 33 mit der Schnittstelle 27 umfaßt und das Benutzerteil 14 des PC einen Bildschirm 34, Diskettenlaufwerke 35 und eine Tastatur 36 mit der Schnittstelle 28 umfaßt. Es ist auch möglich, den Bildschirm, die Diskettenlaufwerke und/oder die Tastatur räumlich zu trennen. Die zentrale Endgerätesteuerung 15, die empfangs- und sendeseitig mit der gemeinsamen HF-Sende- und Empfangseinrichtung 22 verbunden ist, hat folgende Funktionen:
(a) Abwicklung eines funktechnischen Protokolls; mit anderen Worten ist die zentrale Endgerätesteuerung 15 ein Signalisierungsendpunkt z.B. für ein verwendetes GSM-Protokoll;
(b) Abwicklung eines Protokolls zur Ansteuerung der Benutzerteile 12, 13, 14 der Endgeräte;
(c) Auf- und Abbau einer digitalen Sprach- und/oder Datenverbindung zu den Benutzerteilen 12, 13, 14 der Endgeräte;
(d) Umwandlung der Daten (Sprache, Text, Steuersignale) in ein dem spezifischen Benutzerteil 12, 13, 14 verständliches Datenformat;
(e) Schnittstellenanpassung an das Übertragungsnetz 19.

Die Kommunikation zwischen zentraler Endgerätesteuerung 15 und dem Benutzerteil 12, 13, 14 des betreffenden Endgerätes soll so einfach wie möglich gestaltet sein. Im einfachsten Fall besteht diese nur aus einer Datenleitung, mit der die Signale zum Benutzerteil 12, 13, 14 des betreffenden Endgerätes weitergegeben werden, wie z.B. die Aktivierung und Deaktivierung der Benutzerteile 12, 13, 14 der verwendeten Endgeräte über geeignete Steuersignale zur Energieeinsparung.

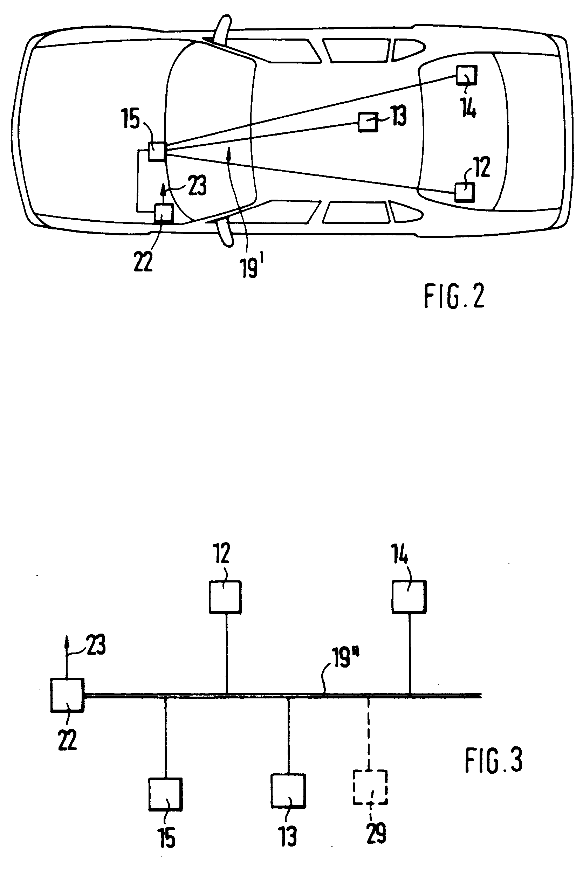

Aus Fig. 2 ist schematisch ersichtlich, wie die einzelnen Bauteile der Telekommunikationsvorrichtung einschließlich des Übertragungsnetzes in einem Personenkraftwagen (Pkw) untergebracht sind. Die mit der Antenne 23 und der HF-Sende- und Empfangseinrichtung 22 verbundene zentrale Endgerätesteuerung 15 ist etwa im Bereich des Armaturenbrettes angeordnet. Ausgehend von der zentralen Endgerätesteuerung 15 ist bei dieser Variante ein sternförmiges Übertragungsnetz 19' vorgesehen, dessen einzelne Leitungen von der zentralen Endgerätesteuerung 15 aus sternförmig zu den einzelnen Benutzerteilen 12, 13 und 14 führen. Dieses sternförmige Übertragungsnetz 19' ist in entsprechender Weise innerhalb des Pkw verlegt.

Der Benutzerteil 12 mit dem Drucker 32, der nur mit den entsprechenden Drucksequenzen für die Pixel angesteuert wird, ist an der Rückenlehne eines Sitzes befestigt. Der Benutzerteil 13, mit dem Telefonhörer 34 und der integrierten Tastatur ist z.B. in die Mittelkonsole zwischen den beiden vorderen Sitzen eingelassen. Vorteilhaft sind vom verbleibenden Benutzerteil 14 der Bildschirm 34 etwa in der Nackenstütze oder der Rückenlehne eines Sitzes, das Laufwerk 35 für die Disketten in einer Armlehne eingebaut und die Tastatur 36 klappbar in der Rückenlehne eines Sitzes integriert.

Nach Fig. 3 ist bei einer Variante als Übertragungsnetz 19'' ein Bussystem vorgesehen, das mit lösbaren Steckverbindern versehen ist und an das die einzelnen Benutzerteile 12, 13, 14 lösbar angeschlossen werden können. Weiterhin sind auch für noch später einzubauende Benutzerteile 29 Steckverbinder vorgesehen. Das als Bussystem ausgebildete Übertragungsnetz 19'' ist damit durch eine einfache und kostengünstige Nachrüstung mit Benutzerteilen von weiteren Endgeräten erweiterbar.

Ein solches, weiteres Endgerät ist etwa ein Navigationsendgerät 29 wie z.B. ein GPS-Empfänger (Global Position System) der zentralen Endgerätesteuerung 15 entweder bereits enthalten oder zusätzlich als Modul einzubauen ist. Dem Benutzerteil 29 des weiteren Endgerätes können auch bereits vorhandene Bauteile zugeordnet werden, wie z.B. der Bildschirm des PC zur Darstellung einer Straßenkarte oder eines Stadtplans und/oder z.B. die Tastatur zur Eingabe der betreffenden Suchbegriffe. Darüberhinaus kann für den Benutzerteil 29 auch der Drucker des Fernkopierers verwendet werden, etwa zum Drucken von Navigationskarten. Auf diese Art und Weise sind weitere Endgeräte in das Kraftfahrzeug integrierbar, ohne daß Bauteile von Benutzerteilen überzählig verwendet werden müssen.

Die hier beschriebene Ausführungsform der Erfindung ist nur ein Beispiel von vielen denkbaren Ausführungsformen. Die Erfindung ist in allen Fahrzeugen, d.h. in Land-, Wasser- und Luftfahrzeugen einsetzbar, insbesondere in solchen Fahrzeugen, in denen eine umfangreiche mobile Telekommunikationsanlage für eine größere Passagierzahl wünschenswert ist, wie etwa in Zügen oder Flugzeugen. So ist auch ein Einsatz der Erfindung denkbar, als integrale mobile Funktelekommunikationsvorrichtung innerhalb zukünftiger land- und satellitengestützter, interkontinentaler Mobilfunknetze wie etwa innerhalb des UMTS (Universal Mobile Telecommunications System) oder innerhalb des TFTS (Terristrial Flight Telephone System). Weiterhin ist die Erfindung besonders vorteilhaft für die mobile Multi-Media-Kommunikation wie z.B. mobile Telekonferenz geeignet.

## Patentansprüche

1. Funk-Telekommunikationsvorrichtung (11) in Fahrzeugen, insbesondere Kraftfahrzeugen, mit einer HF-Sende- und Empfangseinrichtung (22), mit verschiedenen Endgeräten (z.B. Telefonapparat, Fernkopierer), deren telekommunikationsspezifischen Teile von deren Benutzerteilen (12, 13, 14) räumlich getrennt und über ein Übertragungsnetz (19) miteinander verbunden sind, und mit einer zentralen Endgerätesteuerung (15), die die telekommunikationsspezifischen Teile der Endgeräte enthält und die mit der HF-Sende- und Empfangseinrichtung (22) verbunden ist.

2. Funk-Telekommunikationsvorrichtung (11) nach Anspruch 1, bei der die zentrale Endgerätesteuerung (15) zur Durchführung verschiedener Dienste (z.B. Telefon, Fax) eine Schnittstelleneinheit (18) zum Übertragungsnetz (19) und Einheiten für eine Dienstauswahl (17), für eine Datenformatierung (21) enthält, mittels denen sie den Austausch von Signalisierungsdaten zwischen den telekommunikationsspezifischen Teilen so steuert, daß zur Durchführung jeweils eines der verschiedenen Dienste (z.B. Fax) Eingabe-Ausgabemittel (32; 36) von unterschiedlichen Benutzerteilen (12; 14) miteinander verschaltet werden (z.B. Drucker des Fernkopierers und Tastatur des Telefonapparates).

3. Funk-Telekommunikationsvorrichtung (11) nach Anspruch 1, bei der die Benutzerteile (12, 13, 14) der Endgeräte verschiedene Eingabe-/Ausgabemittel (32 ... 36) enthalten, so daß die Telekommunikationsvorrichtung (11) jedes dieser Eingabe-/Ausgabemittel nur einmal enthält.

4. Funk-Telekommunikationsvorrichtung nach Anspruch 3, die als Eingabe-/Ausgabemittel einen Sprechhörer (33) eines Telefonapparates (13) und einen Drucker (32) eines Fernkopierers (12) oder eines PC enthält.

5. Funk-Telekommunikationsvorrichtung nach Anspruch 4, die zusätzlich als Eingabe-/Ausgabemittel einen Bildschirm (34) eines PC oder eines Navigationsgerätes und eine Tastatur (36) desselben enthält.

6. Funk-Telekommunikationsvorrichtung nach Anspruch 1, bei der das Übertragungsnetz ein von der zentralen Endgerätesteuerung (15) ausgehendes Sternnetz (19') ist.

7. Funk-Telekommunikationsvorrichtung nach Anspruch 1, insbesondere in Luftfahrzeugen oder Schienenfahrzeugen, bei der das Übertragungsnetz ein Bussystem (19'') mit Kupplungselementen (z.B. Steckverbindern) ist.

8. Funk-Telekommunikationsvorrichtung nach Anspruch 6 oder 7, bei dem das Übertragungsnetz (19) ein faseroptisches Netz ist.

## Claims

1. A radio telecommunications device (11) in vehicles, in particular motor vehicles, comprising a HF transmitting and receiving device (22) with different terminals (e.g. telephone, fax machine) whose telecommunications-specific parts and user parts (12, 13, 14) are physically separated and are interconnected via a transmission network (19), and comprising a central terminal control unit (15) which contains the telecommunications-specific parts of the terminals and is connected to the HF transmitting and receiving device (22).

2. A radio telecommunications device (11) according to Claim 1 wherein, for the execution of different services (e.g. phone, fax) the central terminal control unit (15) comprises an interface unit (18) to the transmission network (19) and units for service selection (17) and for data formatting (21) by means of which it controls the exchange of signalling data between the telecommunications-specific parts in such manner that for the execution of one of the different services (e.g. fax), input-output means (32; 36) of different user parts (12; 14) are in each case interconnected (e.g. fax machine printer and telephone keyboard).

3. A radio telecommunications device (11) according to Claim 1, wherein the user parts (12, 13, 14) of the terminals comprise different input/output means (32...36) so that the telecommunications device (11) contains each of these input/output means only once.

4. A radio telecommunications device according to Claim 3 which comprises, as input/output means, a handset (33) of a telephone (13) and a printer (32) of a fax machine (12) or of a PC.

5. A radio telecommunications device according to Claim 4 which additionally comprises, as input/output means, a screen (34) of a PC or of a navigation device and a keyboard (36) therefor.

6. A radio telecommunications device according to Claim 1, wherein the transmission network is a star network (19') emanating from the central terminal control unit (15).

7. A radio telecommunications device according to Claim 1, in particular in aircraft or rail vehicles, in which the transmission network is a bus system (19'') with coupling elements (e.g. plug connectors).

8. A radio telecommunications device according to Claim 6 or 7, wherein the transmission network (19) is a fibre-optic network.

## Revendications

1. Dispositif de radiotélécommunication (11) dans des véhicules, en particulier des véhicules automobiles, comportant une unité d'émission et de réception HF (22), différents terminaux (par exemple, téléphone, télécopieur) dont les éléments spécifiques à la télécommunication sont séparés de leurs éléments d'utilisateur (12, 13, 14) et sont reliés l'un à l'autre par un réseau de transmission (19), et une commande centralisée de terminal (15) qui contient les éléments des terminaux spécifiques à la télécommunication et qui est reliée à l'unité d'émission et de réception HF (22).

2. Dispositif de radiotélécommunication (11) selon la revendication 1, caractérisé en ce que la commande centralisée de terminal (15) comporte, pour l'exécution de divers services (par exemple, téléphone, fax), une unité d'interface (18) vers le réseau de transmission (19) et des unités pour une sélection du service (17), pour un formatage des données (21) au moyen desquelles il commande l'échange des données de signalisation entre les éléments spécifiques à la télécommunication de telle sorte que, pour l'exécution respective de l'un des divers services (par exemple, fax), des moyens d'entrée-sortie (32 ; 36) de différents éléments d'utilisateur (12 ; 14) sont connectés l'un avec l'autre (par exemple, imprimante du télécopieur et clavier du téléphone).

3. Dispositif de radiotélécommunication (11) selon la revendication 1, caractérisé en ce que les éléments d'utilisateur (12, 13, 14) des terminaux comportent différents moyens d'entrée-sortie (32 ... 36) si bien que le dispositif de radiotélécommunication (11) ne contient qu'une seule fois chacun des moyens d'entrée-sortie.

4. Dispositif de radiotélécommunication (11) selon la revendication 3, caractérisé en ce que comme moyen d'entrée-sortie, il présente un combiné (33) de téléphone (33) et une imprimante (32) d'un télécopieur (12) ou d'un PC.

5. Dispositif de radiotélécommunication (11) selon la revendication 4, caractérisé en ce qu'il présente en plus comme moyen d'entrée-sortie, un écran (34) d'un PC ou d'un appareil de navigation et un clavier (36) du même appareil.

6. Dispositif de radiotélécommunication (11) selon la revendication 1, caractérisé en ce que le réseau de transmission est un réseau en étoile (19') partant de la commande centralisée du terminal (15).

7. Dispositif de radiotélécommunication (11) selon la revendication 1, en particulier dans des avions ou des véhicules sur rail, caractérisé en ce que le réseau de transmission est un système de bus (19'') avec des éléments de couplage (par exemple, connecteurs).

8. Dispositif de radiotélécommunication (11) selon la revendication 6 ou 7, caractérisé en ce que le réseau de transmission (19) est un réseau à fibres optiques.
